# EUROPEAN PATENT APPLICATION

(11) **EP 4 744 742 A1**
(43) Date of publication of application: **20.05.2026**
(21) Application number: 24839933.9
(22) Date of filing: 20.06.2024
(51) Int. Cl.: A63B 23/04, A63B 22/20, A63B 21/02, A63B 22/00, A63B 71/12, A63B 21/00, C09D 123/08, C09D 161/02, C09D 7/61, C09D 7/63

(54) **FUNCTIONAL LOWER BODY EXERCISE DEVICE**

(30) Priority: 12.07.2023 KR 20230090182
(71) Applicant: Laban Inc., Seoul 02762 (KR)
(72) Inventor: JUN, Yu Ri, Seoul 02762 (KR)
(74) Representative: Cabinet Chaillot
(86) International application number: PCT/KR2024/008573
(87) International publication number: WO 2025/014119

(57) **Abstract**

The present invention relates to a functional lower body exercise device, which can exhibit a concentrated exercise effect on thighs and hips while minimizing strain on knee or ankle joints. To this end, the exercise device of the present invention comprises: a device main body (10) forming an inclined surface (11) of which the height gradually decreases toward the left and right sides from the center; a knee protection shin pad (20) mounted on the inclined surface (11) of the device main body (10) so as to be horizontally movable; an elastic spring (30) formed inside the device main body (10) to elastically support the knee protection shin pad (20); and moving rollers (22, 22') provided on a lower portion of the knee protection shin pad (20) to enable smooth movement along the inclined surface.

## Description

### [Technical Field]

The present invention relates to a lower body exercise device, and more particularly, to a functional lower body exercise device allowing an intensive exercise effect to be achieved for the thighs and hips.

### [Background Art]

Generally, exercise devices such as a treadmill, a stepper, a swing device, and a leg press are used as lower body exercise devices.

Such exercise devices are for strengthening muscles of the lower body or performing full body aerobic exercise, and most such exercise devices are for strengthening the rectus femoris or external rotator muscles such as the vastus lateralis and vastus medialis.

However, long-term or incorrect use of such exercise devices may bring about damage to joints of the knees, ankles, or the like and may cause muscle pain or inflammation.

Therefore, there is a need for an exercise device that can strengthen or rehabilitate thigh and hip muscles while minimizing damage to joints or ankles.

### [Disclosure]

### [Technical Problem]

The present invention has been proposed to address the above-described problems of the related art and is directed to providing an exercise device allowing an intensive exercise to be performed for the thighs and hips while minimizing strain on the knees or joints, thereby maximizing exercise efficiency.

### [Technical Solution]

An exercise device of the present invention for achieving the above objective includes: a device main body forming inclined surfaces having a height that gradually decreases from the center toward both sides; knee protection shin pads mounted to be movable to the left and right on the inclined surfaces of the device main body; elastic springs configured inside the device main body to elastically support the knee protection shin pads; and movable rollers provided on lower portions of the knee protection shin pads to enable smooth movement along the inclined surfaces.

### [Advantageous Effects]

A lower body exercise device of the present invention allows an intensive exercise effect to be achieved for the thighs and hips while minimizing strain on joints of the knees or ankles.

In particular, since an exercise can be performed at a low position while kneeling and supporting one's body weight with the shins, there are advantages that a burden due to the upper body weight is reduced, and exercise can be easily performed at home and indoors.

### [Description of Drawings]

FIG. 1 is a front structural view of a lower body exercise device according to a first embodiment of the present invention.
FIG. 2 is a cross-sectional structural view of the exercise device of the present invention.
FIG. 3 is a top structural view of the exercise device of the present invention.
FIG. 4 shows top and bottom structural views of a knee pad in the present invention.
FIG. 5 is a side structural view of the knee pad in the present invention.
FIG. 6 is a cross-sectional view of a use state of the exercise device of the present invention.
FIG. 7 is a top view of the use state of the exercise device of the present invention.
FIG. 8 is a front structural view of a foldable exercise device according to a second embodiment of the present invention.
FIG. 9 is a view of a state in which the exercise device according to the second embodiment of the present invention is folded and stored.
FIG. 10 is a state view of a configuration of a safety handle according to a third embodiment of the present invention.
FIGS. 11 and 12 are use state views of a pad roller according to an application example of the present invention.

### [Modes of the Invention]

Hereinafter, specific embodiments of the present invention will be described in detail with reference to the accompanying drawings.

Embodiments of the present invention may be modified to various forms, and the scope of the present invention should not be construed as being limited to the embodiments described in detail below. The present embodiments are provided to more fully describe the present invention to those of ordinary skill in the art.

Therefore, shapes or the like of components shown in the drawings may be exaggerated for clearer description. It should be noted that the same components in different drawings are denoted with the same reference numerals in some cases. In addition, detailed description of functions and configurations of a known art that is determined as having the possibility of unnecessarily obscuring the gist of the present invention may be omitted.

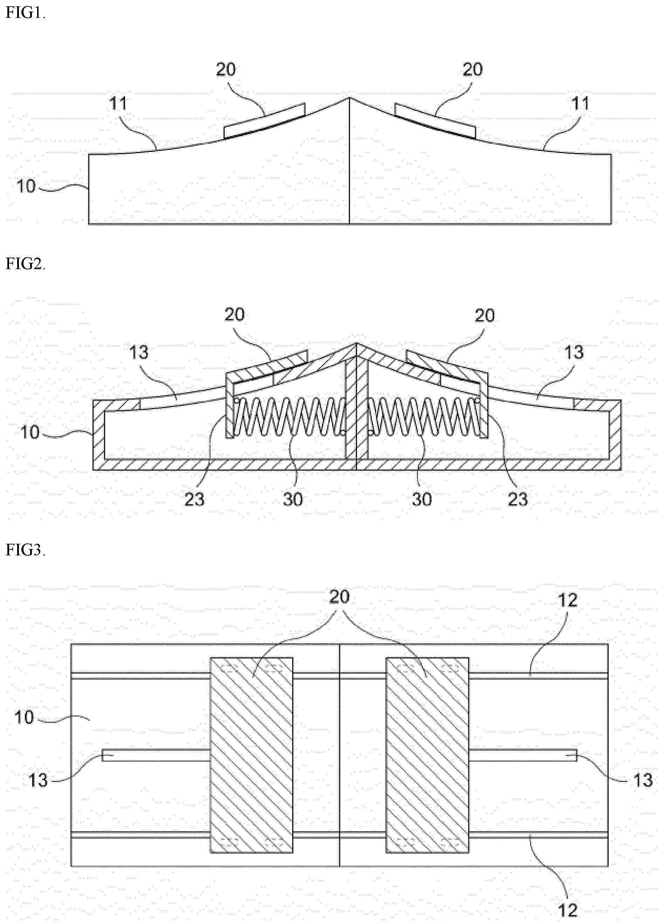

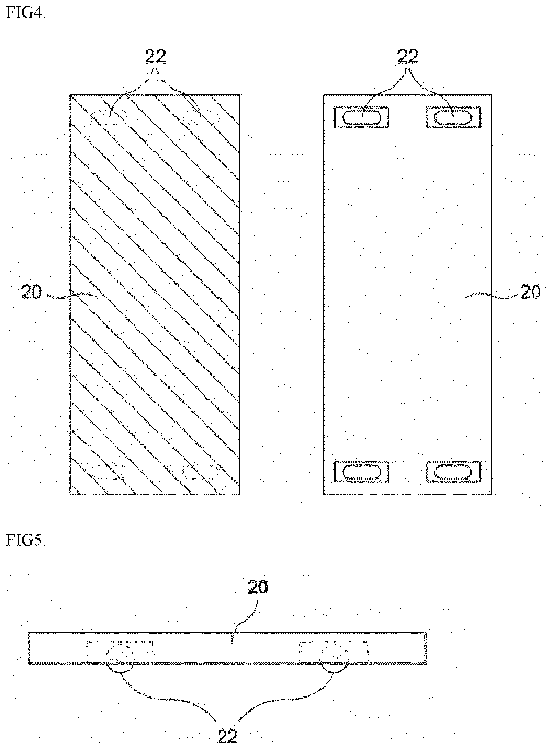

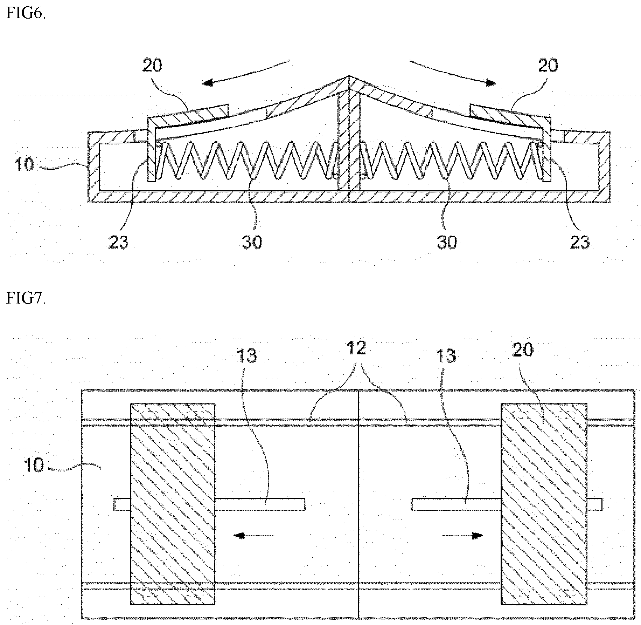

First, a configuration of a lower body exercise device according to a first embodiment of the present invention will be described below with reference to FIGS. 1 to 7.

The lower body exercise device of the present embodiment includes a device main body 10 forming inclined surfaces 11 having a linear or curved form and having a height that gradually decreases from the center toward both left and right sides, knee protection shin pads 20 mounted to be movable to the left and right on the inclined surfaces 11 of the device main body 10, elastic springs 30 configured inside the device main body 10 to elastically support the knee protection shin pads 20, and movable rollers 22 provided on lower portions of the knee protection shin pads 20 to enable smooth movement along the inclined surfaces.

Here, spring connecting bars 23 connected to the elastic springs 30 may be configured to be connected to the knee protection shin pads 20, and guide grooves 13 may be formed at a predetermined length in the inclined surfaces 11 on an upper portion of the device main body 10 to guide movement of the spring connecting bars 23.

In addition, it can be seen that guide grooves 12 for guiding the movable rollers 22 are formed in an upper surface of the device main body 10.

Actions and effects due to using the lower body exercise device of the present invention having the above configuration will be described.

An exercise is performed using the exercise device of the present invention in a state in which the knees of a user are placed on the knee protection shin pads 20.

That is, when force is applied outward to the knee protection shin pads 20 at both sides while the thighs and hips are tightened, the knee protection shin pads 20 at both sides move outward along the inclined surfaces 11, and at this time, the spring connecting bars 23 are guided along the guide grooves 13.

Then, when the force applied to the knee protection shin pads 20 is released, the knee protection shin pads 20 move to their original positions due to an elastic restoration action of the elastic springs 30, and an exercise for strengthening muscles of the thighs and hips may be efficiently performed by repeating the above operation.

Therefore, the lower body exercise device of the present invention allows an intensive exercise effect to be achieved for the thighs and hips while minimizing strain on joints of the knees or ankles.

In particular, since an exercise can be performed at a low position while kneeling, there are advantages that a burden due to upper body weight is reduced, and exercise can be easily performed at home and indoors.

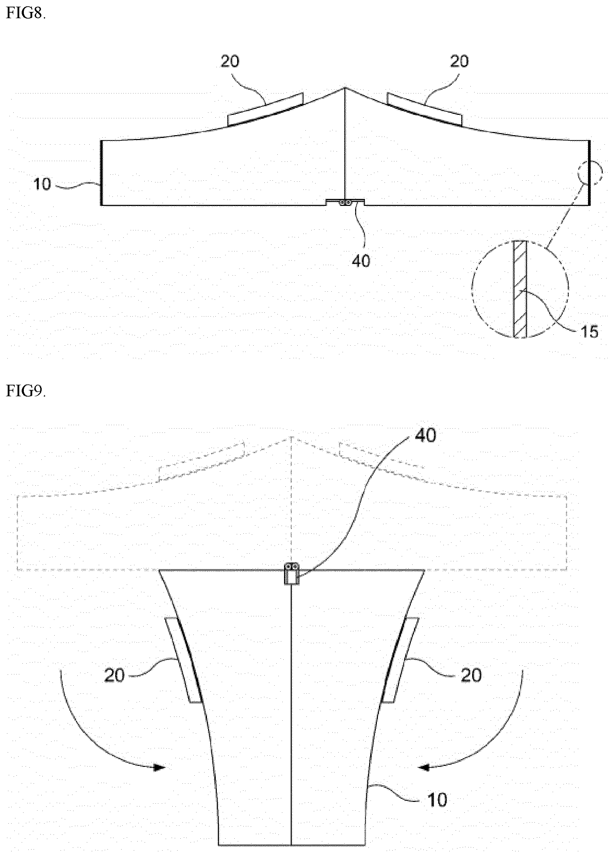

Meanwhile, FIGS. 8 and 9 show a configuration according to a second embodiment of the present invention, in which the device main body 10 has a structure divided into left and right portions and the left and right portions are connected by a hinge 40 to enable the device main body 10 to be folded and stored.

In addition, a protective layer 15 is coated and formed on a sidewall surface of the device main body 10 to prevent sliding against a bottom surface during folding and to protect the surface. Here, preferably, the protective layer 15 may be made of a composition in which 10 to 30 wt% of polyvinyl acetate resin, 5 to 20 wt% of urethane powder, 1 to 10 wt% of phenyl ether, 10 to 30 wt% of furan resin, 1 to 10 wt% of polytetrafluoroethylene, 10 to 20 wt% of a thermoplastic elastomer, 5 to 15 wt% of barium sulfate, and 1 to 15 wt% of sericite powder are mixed.

When the protective layer 15 has the above composition, since the protective layer 15 is coated and formed on the sidewall surface of the device main body 10, damage to the surface can be prevented, and a stable folded state can be maintained due to a frictional force with the bottom surface when the device main body 10 is folded and stored as shown in FIG. 9.

In particular, in the protective layer 15, a mixture of phenyl ether and furan resin prevents penetration of moisture, polytetrafluoroethylene improves coating elasticity through a catalytic function for polyvinyl acetate resin, and urethane powder and the thermoplastic elastomer perform a function of improving surface friction and heat resistance of the protective layer 15. In addition, additionally added barium sulfate and sericite powder each have an advantage of improving surface durability by improving the coating density of the protective layer 15.

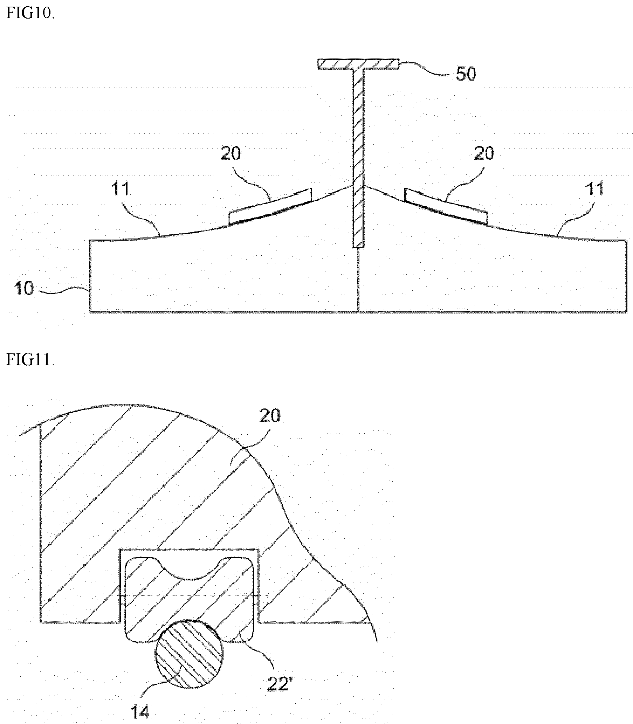

In addition, FIG. 10 shows a third embodiment of the present invention, and it can be seen that a handle 50 of a predetermined height is configured to be connected to a central portion of the device main body 10.

With such a configuration, since movement of the upper body can be prevented by holding the handle 50 by hand during a lower body exercise process, more stable lower body exercise movement is possible.

In addition, although specific embodiments of the present invention have been described and illustrated, it is apparent that the structure of the lower body exercise device of the present invention may be modified and embodied in various ways by those of ordinary skill in the art.

For example, in the above embodiments, a movable roller 22' for smooth movement of the knee protection shin pad 20 may move along a guide rail 14 in a form shown in FIG. 11.

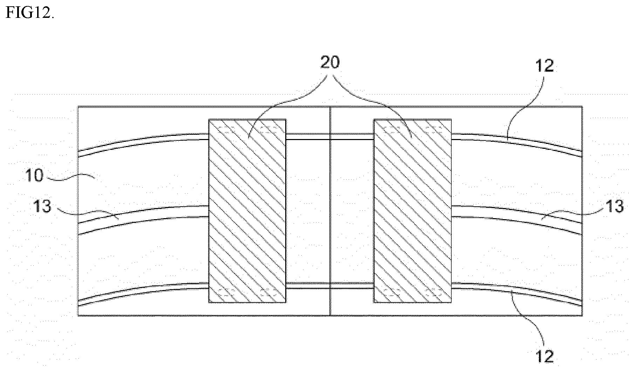

In addition, the guide groove 12 may be formed in a curved form along a structure of the body as shown in FIG. 12.

Therefore, such modified embodiments should not be understood as separate from the technical idea or scope of the present invention, and such modified embodiments should be construed as falling within the appended claims of the present invention.

## Claims

1. A functional lower body exercise device comprising:
a device main body (10) forming inclined surfaces (11) having a height that gradually decreases from the center toward both left and right sides;
knee protection shin pads (20) mounted to be movable to the left and right on the inclined surfaces (11) of the device main body (10);
elastic springs (30) configured inside the device main body (10) to elastically support the knee protection shin pads (20); and
movable rollers (22, 22') provided on lower portions of the knee protection shin pads (20) to enable smooth movement along the inclined surfaces.

2. The functional lower body exercise device of claim 1, wherein spring connecting bars (23) connected to the elastic springs (30) are configured to be connected to the knee protection shin pads (20), and guide grooves (13) are formed at a predetermined length in the inclined surfaces (11) on an upper portion of the device main body (10) to guide movement of the spring connecting bars (23).

3. The functional lower body exercise device of claim 1, wherein:
guide grooves (12) for guiding the movable rollers (22) are formed in an upper surface of the device main body (10), the guide grooves (12) having a linear form or a curved form; and
guide rails (14) for guiding the movable rollers (22') are provided on the upper surface of the device main body (10).

4. The functional lower body exercise device of claim 1, wherein:
the device main body (10) has a structure divided into left and right portions and in which the left and right portions are connected by a hinge (40) to enable the device main body (10) to be folded and stored; and
a handle (50) of a predetermined height is configured to be connected to a central portion of the device main body (10).

5. The functional lower body exercise device of claim 4, wherein a protective layer (15) is coated and formed on a sidewall surface of the device main body (10) to prevent sliding against a bottom surface and protect the surface, and the protective layer (15) is made of a composition in which polyvinyl acetate resin, urethane powder, phenyl ether, furan resin, polytetrafluoroethylene, a thermoplastic elastomer, barium sulfate, and sericite powder are mixed.
